(19) Europäisches Patentamt
European Patent Office
Office européen des brevets

(11) **EP 3 925 931 A1**

(12) **EUROPEAN PATENT APPLICATION**
published in accordance with Art. 153(4) EPC

(43) Date of publication:
**22.12.2021 Bulletin 2021/51**

(21) Application number: **20755221.7**

(22) Date of filing: **07.02.2020**

(51) Int Cl.:
*C01B 32/21* (2017.01)      *H01G 11/42* (2013.01)
*H01G 11/86* (2013.01)      *H01M 4/36* (2006.01)
*H01M 4/587* (2010.01)

(86) International application number:
**PCT/JP2020/004862**

(87) International publication number:
**WO 2020/166513 (20.08.2020 Gazette 2020/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.02.2019 JP 2019023262**

(71) Applicant: **SEKISUI CHEMICAL CO., LTD.**
**Osaka-shi**
**Osaka**
**530-8565 (JP)**

(72) Inventors:
• **YOSHITANI, Hiroshi**
  **Mishima-gun, Osaka 618-0021 (JP)**
• **NAKASUGA, Akira**
  **Mishima-gun, Osaka 618-0021 (JP)**
• **SASAGAWA, Naoki**
  **Mishima-gun, Osaka 618-0021 (JP)**

(74) Representative: **Ter Meer Steinmeister & Partner**
**Patentanwälte mbB**
**Nymphenburger Straße 4**
**80335 München (DE)**

(54) **CARBON MATERIAL-RESIN COMPOSITE MATERIAL, COMPOSITE BODY AND METHOD FOR PRODUCING SAME, AND ELECTRODE MATERIAL FOR ELECTRICITY STORAGE DEVICES**

(57)     Provided is a carbon material-resin composite material that can enhance the capacitor capacitance or the battery capacity when used as an electrode material for an electricity storage device. A carbon material-resin composite material including a carbon material and a resin that is at least partially grafted onto the carbon material, the carbon material-resin composite material having an ionic equivalent of 0.1 mmol/g or more.

[FIG. 1.]

EP 3 925 931 A1

**Description**

**TECHNICAL FIELD**

The present invention relates to a carbon material-resin composite material, a composite in which the carbon material-resin composite material is used, a method for manufacturing the composite, and an electrode material for an electricity storage device, in which the carbon material-resin composite material and the composite are used.

**BACKGROUND ART**

Electricity storage devices such as capacitors and lithium ion secondary batteries have been actively researched and developed in recent years for hybrid vehicles, electric vehicles, and home electricity storage applications. As an electrode material for such electricity storage devices, carbon materials such as graphite, activated carbon, carbon nanofibers, and carbon nanotubes are widely used from the viewpoint of the environment.

Patent Document 1 described below discloses a capacitor electrode material including resin-remaining partially exfoliated graphite obtained through pyrolyzing a resin in a composition in which the resin is fixed to graphite or primary exfoliated graphite through grafting, the resin-remaining partially exfoliated graphite having a structure in which graphite is partially exfoliated, with part of the resin remaining, and a binder resin.

Patent Document 2 described below discloses an electrode for a capacitor including a composite of a carbon material having a graphene laminated structure and fine particles, and having a specific surface area of 1,100 $m^2/g$ or more by a methylene blue adsorption method.

**Related Art Document**

**Patent Documents**

Patent Document 1: WO 2015/098758 A
Patent Document 2: WO 2017/090553 A

**SUMMARY OF THE INVENTION**

**PROBLEMS TO BE SOLVED BY THE INVENTION**

In the field of electricity storage devices such as capacitors and lithium ion secondary batteries, further improvement of the battery characteristic has been awaited. However, even when the capacitor electrode materials of Patent Document 1 and Patent Document 2 are used, the characteristic such as the capacitance has been sometimes still insufficient. Furthermore, the electrolyte used is limited in kind, thus making it difficult to broaden the range of the battery design.

An object of the present invention is to provide a carbon material-resin composite material that can enhance the capacitor capacitance or the battery capacity when used as an electrode material for an electricity storage device, a composite in which the carbon material-resin composite material is used, a method for manufacturing the composite, and an electrode material for an electricity storage device, in which the carbon material-resin composite material and the composite are used.

**MEANS FOR SOLVING THE PROBLEMS**

As a result of intensive studies, the present inventors have found that the above-described object is achieved using, as a resin in a carbon material-resin composite material, a resin having a high affinity with a material such as an electrolyte or fine particles to be combined, and completed the present invention.

That is, the carbon material-resin composite material according to the present invention includes a carbon material and a resin that is at least partially grafted onto the carbon material, and the carbon material-resin composite material has an ionic equivalent of 0.1 mmol/g or more.

In a specific aspect of the carbon material-resin composite material according to the present invention, the resin is a compound having an ionic functional group.

In another specific aspect of the carbon material-resin composite material according to the present invention, the carbon material has a graphene laminated structure.

In still another specific aspect of the carbon material-resin composite material according to the present invention, the carbon material is partially exfoliated graphite having a graphite structure in which graphite is partially exfoliated.

In still another specific aspect of the carbon material-resin composite material according to the present invention, the ionic functional group is an anionic functional group. The anionic functional group is preferably a carboxy group.

In still another specific aspect of the carbon material-resin composite material according to the present invention, the carbon material-resin composite material has a content of the resin of 10 parts by weight or more and 70 parts by weight or less based on 100 parts by weight of the carbon material-resin composite material.

In a broad aspect of the composite according to the present invention, the composite includes a first material being the carbon material-resin composite material configured according to the present invention, and a second material having a functional group capable of turning to a counter ion with respect to the ionic functional group included in the first material.

In a specific aspect of the composite according to the present invention, the ionic functional group is an anionic functional group, and the functional group capable of turning to a counter ion is a cationic functional group.

In another specific aspect of the composite according to the present invention, the carbon material included in the first material has a graphene laminated structure, and the second material is inserted between graphene layers in the carbon material.

In another broad aspect of the composite according to the present invention, the composite includes a first material including a carbon material and a resin being a compound having an ionic functional group, the resin grafted onto the carbon material, and includes a second material having a functional group capable of turning to a counter ion with respect to the ionic functional group, and the composite has a content of the second material of 0.1 mg or less in a filtrate obtained through subjecting a dispersion liquid in which 10 mg of the composite is dispersed in 1 L of an aqueous solvent to ultrasonic treatment for 10 minutes and then filtering the dispersion liquid with a filter having a pore size of 0.3 $\mu$m.

In still another specific aspect of the composite according to the present invention, the composite has a BET specific surface area of 100 $m^2$/g or more and 3,000 $m^2$/g or less.

The method for manufacturing a composite according to the present invention includes the steps of preparing a first material being a carbon material-resin composite material including a carbon material and a resin being a compound having an ionic functional group, and combining the first material and a second material having a functional group capable of turning to a counter ion with respect to the ionic functional group included in the first material.

In a specific aspect of the method for manufacturing a composite according to the present invention, the method further includes the step of heating at a temperature lower than a thermal decomposition temperature of the compound having an ionic functional group after the step of combining.

In another specific aspect of the method for manufacturing a composite according to the present invention, the method further includes the step of heating at a temperature higher than a thermal decomposition temperature of the compound having an ionic functional group after the step of combining.

The electrode material for an electricity storage device according to the present invention includes the carbon material-resin composite material or composite configured according to the present invention.

## EFFECT OF THE INVENTION

According to the present invention, it is possible to provide a carbon material-resin composite material that can enhance the capacitor capacitance or the battery capacity when used as an electrode material for an electricity storage device.

## BRIEF DESCRIPTION OF DRAWINGS

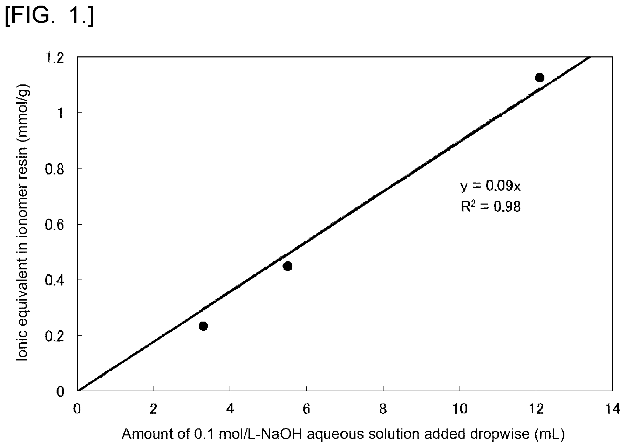

[Fig. 1] Fig. 1 is a graph showing the relationship in a dripping test between the amount of dripped sodium hydroxide and the ionic equivalent in an ionomer resin.

## MODES FOR CARRYING OUT THE INVENTION

Hereinafter, details of the present invention will be described.

[Carbon material-resin composite material]

The carbon material-resin composite material according to the present invention includes a carbon material and a resin. The resin is at least partially grafted onto the carbon material. The carbon material-resin composite material has an ionic equivalent of 0.1 mmol/g or more.

In the carbon material-resin composite material according to the present invention, the resin is grafted onto the carbon material, and the ionic equivalent is the above-described lower limit or more as described above, and as a result, the carbon material-resin composite material can be dispersed in various kinds of solvents through adjustment of the pH. In particular, the carbon material can be dispersed in an aqueous solvent although conventional carbon materials have been difficult to disperse in an aqueous solvent. Furthermore, when the carbon material-resin composite material is used as an electrode material for an electricity storage device, the affinity with the electrolyte is improved, and therefore, the characteristic such as capacitor capacitance or the battery capacity of the electricity storage device can be enhanced. Therefore, when the carbon material-resin composite material is used as an electrode material for an electricity storage device, it is possible to broaden the range of the capacitor design or the battery design. As described above, the present invention has found that by setting the ionic equivalent of the carbon material-resin composite material to the above-described lower limit or more, it is possible to improve the characteristic such as the capacitor capacitance or the battery capacity of an electricity storage device.

In the present invention, the ionic equivalent of the carbon material-resin composite material is 0.1 mmol/g or more, preferably 0.5 mmol/g or more, more preferably 0.8 mmol/g or more, and still more preferably 1 mmol/g or more. In this case, it is possible to further broaden the above-described range of the battery design. The upper limit of the ionic equivalent of the carbon material-resin composite material is not particularly limited, and can be, for example, 4 mmol/g.

The "ionic equivalent of the carbon material-resin composite material" can be measured, for example, using the following neutralization titration method in an environment of 22 $\pm$ 1°C.

<Neutralization titration method>

First, a dispersion liquid is prepared in which 0.2 g of a carbon material-resin composite material is dispersed in 50 g of ion-exchanged water. Under a stirring condition of 200 rpm, an aqueous solution for neutralization titration is added dropwise to the dispersion liquid, and the amount (mL) of the aqueous solution for neutralization titration required to reach the neutralization titration point is measured. From the amount of the aqueous solution for neutralization titration and Formula (1) described below, the ionic equivalent of the carbon material-resin composite material is calculated.

$$y = 0.09x \ldots \text{Formula (1)}$$

Here, y means the ionic equivalent of the carbon material-resin composite material, and x means the amount of the aqueous solution for neutralization titration. As the aqueous solution for neutralization titration, a 0.1 mol/L sodium hydroxide aqueous solution is used when the dispersion liquid has a pH in the acidic range, and 0.1 mol/L hydrochloric acid is used when the dispersion liquid is alkaline. The neutralization titration point means the point at which the pH does not change by 0.1 or more after the dispersion liquid to which the aqueous solution for neutralization titration is added dropwise is left for 30 minutes.

Formula (1) described above is derived through creating the calibration curve shown in Fig. 1 in Examples described below.

The resin included in the carbon material-resin composite material according to the present invention is preferably a compound having an ionic functional group. In this case, the ionic equivalent of the carbon material-resin composite material can be appropriately adjusted according to the kind and the amount of the compound having an ionic functional group.

The compound having an ionic functional group may be a monomer or a polymer.

In the present invention, the ionic functional group is a functional group having ionic conductivity. The ionic functional group may be an anionic functional group or a cationic functional group. Examples of the anionic functional group include a carboxyl group, a sulfonic acid group, a phosphoric acid group, a nitric acid group, a phenol group, and an acetylacetone group. Examples of the cationic functional group include an amino group, an amide group, a quaternary ammonium group, and an imide group.

As the compound having such an ionic functional group, for example, an ionomer resin can be used.

Examples of the monomer having an anionic functional group include methacrylic acid, itaconic acid, acrylic acid, crotonic acid, 2-acryloyloxyethyl succinate, 2-methacryloyloxyethyl succinate, 2-methacryloyloxyethyl phthalic acid, and β-carboxyethyl acrylate. Furthermore, a compound monomer having a sulfonic acid group, a phosphoric acid group, or a nitric acid group may be used. Examples of the compound monomer having a phosphoric acid group include Phosmer (registered trademark) M, Phosmer (registered trademark) CL, Phosmer (registered trademark) PE, Phosmer (registered trademark) MH, and Phosmer (registered trademark) PP, manufactured by Unichemical Co., Ltd. The monomers having an anionic functional group may be used singly or in combination of two or more kinds thereof.

Examples of the monomer having a cationic functional group include allylamine, diethylaminoethyl (meth)acrylate, dimethylaminoethyl (meth)acrylate, N-vinylpyrrolidone, dimethylacrylamide, acryloylmorpholine, isopropylacrylamide, diethylacrylamide, and dimethylaminopropylacrylamide. The monomers having a cationic functional group may be used singly or in combination of two or more kinds thereof. In the present specification, the term "(meth)acrylate" refers to a methacrylate or an acrylate.

Furthermore, the monomer having an ionic functional group may be copolymerized with another monomer.

It is desirable that the monomer having an ionic functional group is included so that 1 mol of the obtained polymer preferably includes the unit of the monomer having an ionic functional group at a content of 5 mol% or more, more preferably 10 mol% or more, and still more preferably 20 mol% or more, and preferably 50 mol% or less.

Examples of another monomer include monomers having a hydroxyl group. The monomers may be used singly or in combination of two or more kinds thereof.

Examples of the monomer having a hydroxyl group include hydroxyethyl (meth)acrylate, hydroxypropyl (meth)acrylate, hydroxybutyl (meth)acrylate, and hydroxyethyl acrylamide. The monomers may be used singly or in combination of two or more kinds thereof. It is desirable that the monomer having a hydroxyl group is included so that 1 mol of the obtained polymer preferably includes the unit of the monomer at a content of 5 mol% or more and more preferably 20 mol% or more, and preferably 50 mol% or less.

Furthermore, the monomer may be copolymerized with another monomer. As another monomer, acrylic acid alkyl esters and methacrylic acid alkyl esters can be used that have an alkyl group having preferably 1 to 14 carbon atoms, and more preferably 4 to 12 carbon atoms. Specific examples of such an acrylate-based monomer include n-butyl (meth)acrylate, t-butyl (meth)acrylate, 2-ethylhexyl (meth)acrylate, isooctyl (meth)acrylate, and isononyl (meth)acrylate. In addition, also included are vinyl acetate, styrene, acrylonitrile, glycidyl methacrylate, isobornyl (meth)acrylate, 2-methoxyethyl (meth)acrylate, cyclohexyl (meth)acrylate, phenol EO-modified (meth)acrylate, nonylphenol EO-modified (meth)acrylate, 2-ethylhexyl EO-modified (meth)acrylate, N-acryloyloxyethyl hexahydrophthalimide, ω-carboxy-polycaptolactone monoacrylate, phthalic acid monohydroxyethyl acrylate, and 2-hydroxy-3-phenoxypropyl acrylate. The monomers may be used singly or in combination of two or more kinds thereof. In the present specification, the term "(meth)acrylate" refers to a methacrylate or an acrylate.

These monomers can be polymerized using, for example, a radical polymerization method to form a polymer. That is, these monomers can be polymerized using a radical polymerization method to form a resin being a compound having an ionic functional group. As the radical polymerization method, for example, various conventionally known polymerization methods can be used. At this time, a radical initiator may be used.

In the present invention, in addition to the above-described compound having an ionic functional group, another polymer may be mixed. Examples of another polymer include polyolefins, ethylene-propylene-diene rubber (EPDM), ethylene-vinyl acetate copolymers (EVAs), polyvinyl alcohol, ethylene-vinyl alcohol copolymers, polyvinyl acetal, polyvinylpyrrolidone, poly(meth)acrylate, and copolymers thereof. In addition, polymers obtained through cationic polymerization, such as polyisobutylene and polyalkylene ethers, may be used. Furthermore, polymers such as polyesters and polyethers may be used. These polymers may be used singly or in combination of two or more kinds thereof.

In the present invention, the resin being a compound having an ionic functional group may be partially grafted onto the carbon material, or may be wholly grafted onto the carbon material. The resin may be grafted onto the surface of the carbon material. When the carbon material has a graphene laminated structure, the resin may be grafted onto the carbon material between the graphene layers. In this case, the second material described below can be further easily inserted between the graphene layers.

Whether the resin is grafted onto the carbon material can be confirmed with, for example, the following method. First, a carbon material-resin composite material is washed with a solvent capable of dissolving the grafted resin to obtain a sample, and the sample is dried and then measured using thermal analysis in a temperature range of, for example, 30°C to 1,000°C in the air at a temperature rise rate of 10°C/min. Then, when a thermogravimetric change corresponding to the combustion of the resin is observed from the differential thermal analysis result, it can be determined that the resin is grafted onto the carbon material. The solvent capable of dissolving the grafted resin can be appropriately selected according to the kind of the resin used for grafting. For example, alcohols such as ethanol, toluene, ethyl acetate, and aqueous solutions having an adjusted pH can be used.

The graft ratio of the resin onto the carbon material is preferably 10% by weight or more and more preferably 20% by weight or more, and preferably 70% by weight or less and more preferably 60% by weight or less. When the graft ratio of the resin onto the carbon material is the above-described lower limit or more, the dispersibility in a solvent can be further enhanced. When the graft ratio of the resin onto the carbon material is the above-described upper limit or less, combining of the second material described below can be further promoted. The graft ratio can be determined using, for example, the above-described thermal analysis measurement.

As the carbon material, for example, carbon materials having a graphene laminated structure, such as graphite and exfoliated graphite, expanded graphite, graphene, carbon nanotubes, carbon blacks, and carbon fibers can be used. Among these materials, carbon materials having a graphene laminated structure are preferable from the viewpoint of combining the material with the second material described below to further enhance the characteristic such as the conductivity.

The carbon material having a graphene laminated structure is a laminate of a plurality of graphene sheets. Whether a carbon material has a graphene laminated structure can be confirmed by, in measurement of the X-ray diffraction spectrum of the carbon material using a CuK$\alpha$ ray (wavelength: 1.541 Å), whether a peak in the vicinity of 2$\theta$ = 26° (a peak derived from a graphene laminated structure) is observed. The X-ray diffraction spectrum can be measured using a wide-angle X-ray diffraction method. As the X-ray diffractometer, for example, SmartLab (manufactured by Rigaku Corporation) can be used.

In the carbon material having a graphene laminated structure, the number of stacked graphene sheets is preferably 5 or more and more preferably 10 or more, and preferably 10,000 or less and more preferably 1,000 or less. When the number of stacked graphene sheets is the above-described lower limit or more, the conductivity of the carbon material itself can be further enhanced. When the number of stacked graphene sheets is the above-described upper limit or less, the specific surface area of the carbon material can be further increased, and a conductive path can be further easily formed when the carbon material is used as an electrode material.

The shape of the carbon material having a graphene laminated structure is not particularly limited, and examples of the shape include two-dimensional spreading shapes, spherical shapes, fibrous shapes, and indefinite shapes. The shape of the carbon material is preferably a two-dimensional spreading shape. Examples of the two-dimensional spreading shape include flaky shapes and plate shapes (flat plate shapes). When the carbon material has such a two-dimensional spreading shape, a further good conductive path can be formed using the carbon material as an electrode material.

The shape of the carbon material is particularly preferably a flaky shape. If the carbon material has a flaky shape, a further good conductive path can be formed using the carbon material as an electrode material.

As the graphite, for example, natural graphite, artificial graphite, or expanded graphite can be used. Expanded graphite has a larger distance between graphene layers than ordinary graphite at a high proportion. Therefore, expanded graphite is preferably used as the graphite.

The exfoliated graphite is produced through exfoliating the original graphite, and is a laminate of graphene sheets that is thinner than the original graphite. The number of stacked graphene sheets in the exfoliated graphite is to be smaller than that of the original graphite. The exfoliated graphite may be oxidized exfoliated graphite.

The exfoliated graphite is preferably partially exfoliated graphite having a graphite structure in which graphite is partially exfoliated.

More specifically, the phrase "graphite is partially exfoliated" means that a graphene laminate has graphene layers separated in the range from the edge to the inside to some extent, that is, a part of the graphite is exfoliated at the edge (edge portion). In addition, the phrase means that the graphite layers are stacked in the central portion in the same manner as in the original graphite or the primary exfoliated graphite. Therefore, the portion where a part of the graphite is exfoliated at the edge leads to the central portion. Furthermore, the partially exfoliated graphite may include exfoliated graphite whose edge is exfoliated.

As described above, the partially exfoliated graphite has a central portion in which the graphite layers are stacked in the same manner as in the original graphite or the primary exfoliated graphite. Therefore, in the partially exfoliated graphite, the degree of graphitization is higher than that in conventional graphene oxides and carbon blacks, and the conductivity is excellent. Furthermore, since the partially exfoliated graphite has a structure in which graphite is partially exfoliated, the specific surface area is large. Therefore, when used as an electrode material for an electricity storage device, the carbon material can further enhance the battery characteristic such as the capacity.

The carbon material-resin composite material according to the present invention can be obtained, for example, through grafting a resin being a compound having an ionic functional group onto a carbon material. Specifically, first, a carbon material and a resin being a compound having an ionic functional group are mixed. Next, the resin is heated to be thermally decomposed. Thus, a radical is generated and grafted onto the carbon material. The heating temperature in the thermal decomposition of the resin depends on the kind of the resin and is not particularly limited, and can be, for example, 250°C to 1,000°C. The heating time can be, for example, 20 minutes to 5 hours. The heating may be performed in the air or in an atmosphere of an inert gas such as a nitrogen gas. However, it is desirable to perform the heating in an atmosphere of an inert gas such as a nitrogen gas.

Hereinafter, an example of a method for manufacturing a carbon material-resin composite material will be described in which partially exfoliated graphite is used as the carbon material.

First, for example, a composition is prepared that includes graphite or primary exfoliated graphite and a resin that is a compound having an ionic functional group and is fixed to the graphite or primary exfoliated graphite through grafting. Next, the resin included in the composition is thermally decomposed. Thus, the graphite or primary exfoliated graphite is exfoliated at the edge portion. The resin is thermally decomposed while a part of the resin is left undecomposed. In this case, it is desirable that the resin left undecomposed (hereinafter, also simply referred to as the remaining resin) is fixed to the partially exfoliated graphite through grafting.

As the graphite, expanded graphite is preferably used because the graphite of the expanded graphite can be further easily exfoliated. Examples of the primary exfoliated graphite widely include exfoliated graphite produced through exfoliating graphite using various methods. The primary exfoliated graphite may be partially exfoliated graphite. Since the primary exfoliated graphite is produced through exfoliating graphite, the specific surface area of the primary exfoliated graphite is to be larger than that of graphite.

The heating temperature in the thermal decomposition of the resin having an ionic functional group depends on the kind of the resin and is not particularly limited, and can be, for example, 250°C to 1,000°C. The heating time can be, for example, 20 minutes to 5 hours. The heating may be performed in the air or in an atmosphere of an inert gas such as a nitrogen gas. However, it is desirable to perform the heating in an atmosphere of an inert gas such as a nitrogen gas.

The content of the remaining resin is preferably 5% by weight or more and more preferably 10% by weight or more, and preferably 70% by weight or less and more preferably 60% by weight or less based on 100 parts by weight of the partially exfoliated graphite excluding the resin content. When the content of the remaining resin is the above-described lower limit or more, the dispersibility in a solvent can be further enhanced. When the content of the remaining resin is the above-described upper limit or less, the conductivity of the partially exfoliated graphite itself can be further enhanced.

The partially exfoliated graphite can be obtained using a compound having an ionic functional group as the resin, and in addition, with reference to the exfoliated graphite/resin composite material described in WO 2014/034156 A. Whether graphite is partially exfoliated can be also confirmed, for example, from observation with a scanning electron microscope (SEM) or from the X-ray diffraction spectrum as in the case of the exfoliated graphite/resin composite material described in WO 2014/034156 A.

However, the method for manufacturing employs a compound having an ionic functional group as the resin, so that ionic repulsion occurs between the ionic functional groups of the compound grafted onto the original graphite or partially exfoliated graphite. As a result, the distance between graphene layers can be further increased when the carbon material-resin composite material is put into an aqueous solution having a pH at which the ion is dissociated.

In the thermal decomposition, a thermally decomposable foaming agent may be used in combination. In this case, the graphite or primary exfoliated graphite can be further effectively exfoliated through heating during the thermal decomposition.

The thermally decomposable foaming agent is not particularly limited as long as it is a compound that spontaneously decomposes by heating and generates a gas at the time of decomposition. As the thermally decomposable foaming agent, foaming agents can be used such as azocarboxylic acid-based, diazoacetamide-based, azonitrile compound-based, benzenesulfohydrazine-based, and nitroso compound-based foaming agents that generate a nitrogen gas at the time of decomposition, and foaming agents that generate carbon monoxide, carbon dioxide, methane, an aldehyde, or the like at the time of decomposition. The thermally decomposable foaming agents may be used singly or in combination of two or more kinds of the foaming agents. When a cationic thermally decomposable foaming agent is used, the functional group of the compound having an anionic functional group can be a cationic functional group.

The BET specific surface area of the carbon material-resin composite material according to the present invention is preferably 10 $m^2/g$ or more and more preferably 50 $m^2/g$ or more, and preferably 400 $m^2/g$ or less and more preferably 300 $m^2/g$ or less. When the BET specific surface area is the above-described lower limit or more, the property to combine with the second material described below can be further enhanced. When the BET specific surface area is the above-described upper limit or less, the conductivity of an electricity storage device can be further enhanced. In the present specification, the BET specific surface area can be measured from a nitrogen adsorption isotherm in accordance with the BET method.

The carbon material-resin composite material according to the present invention can be suitably used as an electrode material for an electricity storage device. Furthermore, the carbon material-resin composite material can also be used as an electrode material for an aqueous electrolyte secondary battery in which a conventional material has been difficult to use.

[Composite]

In the composite according to the present invention, the first material that is the above-described carbon material-resin composite material and a second material having a functional group capable of turning to a counter ion of the ionic functional group are combined. Hereinafter, the ionic functional group included in the resin included in the first material is referred to as the first functional group, and the functional group, included in the second material, capable of turning to a counter ion of the first functional group is referred to as the second functional group. Therefore, when the first functional group is an anionic functional group, the second functional group is a cationic functional group. When the first functional group is a cationic functional group, the second functional group is an anionic functional group.

In the composite according to the present invention, the first functional group and the second functional group electrically interact with each other between different ions, leading to a further strong bond between the first material and the second material. Therefore, release of the second material from the first material due to physical stimulation or the like rarely occurs. As a result, the composite can maintain a high BET specific surface area.

When the carbon material included in the first material is a carbon material having a graphene laminated structure, it is preferable that the second material be at least partially present between the graphene layers of the carbon material having a graphene laminated structure. In this case, it is possible to improve the characteristic of the composite effectively by placing the second material having various characteristics between the graphene layers. For example, it is possible to enhance the battery characteristic effectively by using a conductive material or a material capable of adsorbing and desorbing ions as the second material. In particular, in the composite according to the present invention, even when such a material is used as the second material, release of the second material from the carbon material due to physical stimulation or the like rarely occurs. Specifically, even when the electrolyte swells or the volume of the active material changes due to charge and discharge, the second material is rarely released from the carbon material. Therefore, it is possible to suppress deterioration of the battery characteristic due to release of the second material from the electrode. The second material may be partially present on the surface of the carbon material having a graphene laminated structure. Thus, the dispersibility in a solvent can be further enhanced.

The second material is not particularly limited, and for example, conductive fine particles, fine particles capable of adsorbing and desorbing ions, and the like can be used. Specifically, fine particles can be used that are obtained through modifying a carbon material such as a carbon nanotube, graphene, activated carbon, or a carbon black with the second functional group. In addition, metals and metal compounds can be used that are modified with the second functional group. As the metal, for example, Co, Mn, Ni, P, Sn, Ge, Si, Ti, Zr, V, and Al can be used, and as the metal compound, compounds of these metals can be used. The second materials may be used singly or in combination of two or more kinds thereof.

The second material preferably has an average particle size of 5 nm or more and more preferably 10 nm or more, and preferably 100 nm or less and more preferably 50 nm or less. When the average particle size of the second material is the above-described lower limit or more, the characteristic such as the capacitor capacitance and the ion adsorptivity can be further improved. When the average particle size of the second material is the above-described upper limit or less, insertion of the second material between the graphene layers can facilitate permeation of an electrolytic solution and an ionic substance. The average particle size is a value calculated by volume-based distribution (d50) using a particle size distribution measuring device with a laser diffraction method.

The method for manufacturing a composite according to the present invention is not particularly limited, and a composite can be obtained, for example, through mixing the first material and the second material with a wet method. Specifically, first, the first material is added to an aqueous solution in which the pH is adjusted so that the first functional group included in the first material is ionized to obtain a first aqueous solution. The second material is added to an aqueous solution in which the pH is adjusted so that the second functional group included in the second material is ionized to obtain a second aqueous solution. Next, the second aqueous solution is added dropwise to the first aqueous solution to mix the solutions. Thus, the first functional group and the second functional group electrically interact with each other between different ions for heteroaggregation to obtain a composite. The second aqueous solution may be added dropwise to the first aqueous solution, and the procedure of the mixing is not particularly limited. When a material having an anionic functional group is used, the pH of the first aqueous solution and the second aqueous solution can be, for example, 2 to 6. When a material having a cationic functional group is used, the pH of the first aqueous solution and the second aqueous solution can be, for example, 8 to 12.

The reaction between the first functional group included in the first aqueous solution and the second functional group included in the second aqueous solution causes heteroaggregation. Therefore, when the carbon material included in the first aqueous solution, like, for example, the above-described resin-remaining partially exfoliated graphite, includes a resin that has the first functional group and is grafted between the graphene layers, the second material can be inserted deeper between the graphene layers due to heteroaggregation. As a result, release of the second material due to physical stimulation or the like is further less likely to occur.

The obtained composite may be further subjected to heat treatment. For example, the composite may be heated at a temperature lower than the thermal decomposition temperature of the resin included in the first material. In this case, the binding force between the resin included in the first material and the second material can be further enhanced through a chemical reaction or the like to further enhance the dispersibility in a material such as a solvent or a binder resin. In this case, the resulting composite is a composite of the carbon material, the resin, and the second material. For example, when the carbon material is partially exfoliated graphite, the resulting composite is a composite of the partially exfoliated graphite, the resin grafted between the graphene layers of the partially exfoliated graphite, and the second material bonded to the resin through the interaction between the ions. The heating temperature in this case can be, for example, 150°C to 350°C. The heating time can be 20 minutes to 5 hours.

Alternatively, the composite may be heated at a temperature higher than the thermal decomposition temperature of the resin included in the first material. In this case, a part or all of the resin included in the first material can be removed. Therefore, the conductivity of the obtained composite can be further enhanced. The heating temperature in this case can be, for example, 350°C to 1,000°C. The heating time can be 20 minutes to 5 hours. The heating temperature and the heating time can be controlled to adjust the amount of remaining resin.

When the resin is remaining, the resulting composite is a composite of the carbon material, the resin, and the second material. When the resin is completely removed, the resulting composite is a composite of the carbon material and the second material. For example, when the carbon material is partially exfoliated graphite, the resulting composite is a composite of the partially exfoliated graphite and the second material placed between the graphene layers of the partially exfoliated graphite. In this case, the characteristic such as the conductivity of the composite can be further enhanced.

The composite according to the present invention preferably has a BET specific surface area of 100 $m^2/g$ or more and more preferably 500 $m^2/g$ or more, and preferably 3,000 $m^2/g$ or less and more preferably 2,500 $m^2/g$ or less. When the BET specific surface area is the above-described lower limit or more, the capacitance of an electricity storage device can be further enhanced. When the BET specific surface area is the above-described upper limit or less, the characteristic such as the conductivity in the composite can be further enhanced.

The content of the carbon material included in the first material in the composite is preferably 5% by weight or more and more preferably 10% by weight or more, and preferably 80% by weight or less and more preferably 50% by weight or less based on the total amount of the composite. When the content of the carbon material is in the above-described range, the characteristic such as the conductivity in the composite can be further enhanced.

The content of the resin included in the first material in the composite is preferably 1% by weight or more and more preferably 3% by weight or more, and preferably 70% by weight or less and more preferably 40% by weight or less based on the total amount of the composite. When the content of the resin is the above-described lower limit or more, the dispersibility in a material such as a solvent or a binder resin can be further enhanced. When the content of the resin is the above-described upper limit or less, the adsorptivity of the second material in the composite is enhanced to further enhance the characteristic such as the conductivity.

The content of the second material in the composite is preferably 20% by weight or more and more preferably 50% by weight or more, and preferably 95% by weight or less and more preferably 90% by weight or less based on the total amount of the composite. When the content of the second material is the above-described lower limit or more, the characteristic such as the particle strength in the composite can be further enhanced. When the content of the second material is the above-described upper limit or less, the second material can exhibit its surface characteristic such as the high surface area or the adsorption characteristic between the graphene layers.

In another broad aspect of the present invention, the composite includes a first material including a carbon material and a compound having an ionic functional group and being grafted onto the carbon material, and includes a second material having a functional group capable of turning to a counter ion with respect to the ionic functional group. At this time, the composite has a content of the second material of 0.1 mg or less in a filtrate obtained through subjecting a dispersion liquid in which 10 mg of the composite is dispersed in 1 L of a solvent to ultrasonic treatment for 10 minutes and then filtering the dispersion liquid with a filter having a pore size of 0.3 $\mu$m. The filtrate is preferably colorless and transparent. In this case, release of the second material due to physical stimulation or the like can be further suppressed. As the solvent, an aqueous solvent can be used.

[Electrode material for electricity storage device and electricity storage device]

The electricity storage device according to the present invention is not particularly limited, and examples of the electricity storage device include nonaqueous electrolyte primary batteries, aqueous electrolyte primary batteries, nonaqueous electrolyte secondary batteries, aqueous electrolyte secondary batteries, capacitors, electric double layer capacitors, and lithium ion capacitors. The electrode material for an electricity storage device according to the present invention is an electrode material used in an electrode of such an electricity storage device as is described above.

The electrode material for an electricity storage device according to the present invention includes the above-described carbon material-composite material or composite according to the present invention. Therefore, the electrode material can be dispersed in various kinds of solvents through adjusting the pH, and can be excellent in affinity with the electrolyte. Therefore, the electrode material can also be used in an aqueous electrolyte secondary battery. Furthermore, in an electricity storage device including an electrode including such an electrode material for an electricity storage device, the battery characteristic such as the capacitance or the output characteristic can be improved. The electrode material for an electricity storage device may be used in a positive electrode or a negative electrode.

The electrode material for an electricity storage device can be used as an electrode for an electricity storage device through shaping the carbon material-composite material or composite according to the present invention with, if necessary, a binder resin or a solvent.

The electrode material for an electricity storage device can be shaped through, for example, forming a sheet with a rolling roller and then drying the sheet, or may be shaped through applying a coating liquid including the carbon material-composite material or composite according to the present invention, a binder resin, and a solvent to a current collector and then drying the resulting product.

As the binder resin, for example, fluorine-based polymers such as polybutyral, polytetrafluoroethylene, styrene-butadiene rubber, polyimide resins, acrylic-based resins, and polyvinylidene fluoride, and water-soluble carboxymethyl celluloses can be used. Polytetrafluoroethylene can be preferably used. When polytetrafluoroethylene is used, the dispersibility and the heat resistance can be further improved.

The compounding ratio of the binder resin is preferably in the range of 0.3 parts by weight to 40 parts by weight, and more preferably in the range of 0.3 parts by weight to 15 parts by weight with respect to 100 parts by weight of the carbon material-composite material or composite. By setting the compounding ratio of the binder resin in the above-described range, it is possible to further enhance the battery characteristic such as the capacity of an electricity storage device.

As the solvent, solvents such as ethanol, N-methylpyrrolidone (NMP), and water can be used.

As the electrolytic solution of an electricity storage device, an aqueous electrolytic solution or a nonaqueous (organic) electrolytic solution may be used.

Examples of the aqueous electrolytic solution include electrolytic solutions in which water is used as a solvent, and sulfuric acid, potassium hydroxide, or the like is used as an electrolyte. The aqueous electrolytic solution may be an aqueous solution in which a lithium salt, such as lithium nitrate, lithium sulfate, or lithium acetate, or the like is dissolved.

As the nonaqueous electrolytic solution, for example, electrolytic solutions can be used in which the solvent, the electrolyte, and the ionic liquid described below are used. Specific examples of the solvent include acetonitrile, propylene carbonate (PC), ethylene carbonate (EC), dimethyl carbonate (DMC), diethyl carbonate (DEC), and acrylonitrile (AN).

Examples of the electrolyte include lithium hexafluorophosphate ($LiPF_6$), lithium tetrafluoroborate ($LiBF_4$), tetraethylammonium tetrafluoroborate ($TEABF_4$), and triethyl methylammonium tetrafluoroborate ($TEMABF_4$).

As the ionic liquid, for example, ionic liquids can be used that have the cation and the anion described below. Examples of the cation include an imidazolium ion, a pyridinium ion, an ammonium ion, and a phosphonium ion. Examples of the anion include a tetrafluoroborate ion ($BF_4^-$), a hexafluoroborate ion ($BF_6^-$), an aluminum tetrachloride ion ($AlCl_4^-$), a tantalum hexafluoride ion ($TaF_6^-$), and a tris(trifluoromethanesulfonyl)methane ion ($C(CF_3SO_2)_3^-$). When the ionic liquid is used, the drive voltage can be further improved in the electricity storage device. That is, the energy density can be further improved.

Next, the present invention will be clarified by giving specific Examples and Comparative Examples of the present invention. Note that the present invention is not limited to Examples shown below.

(Synthesis Example 1)

Synthesis of ionomer resin A;
tert-Butyl methacrylate (manufactured by Mitsubishi Rayon Co., Ltd., product name "Acrylic Ester TB") (40 g), hydroxybutyl acrylate (manufactured by OSAKA ORGANIC CHEMICAL INDUSTRY LTD., product name "4-HBA") (40 g), methacrylic acid (manufactured by FUJIFILM Wako Pure Chemical Corporation, Wako special grade) (20 g), and dodecyl mercaptan (manufactured by Tokyo Chemical Industry Co., Ltd., grade EP) (0.6 g) were dissolved in 150 g of ethyl acetate to prepare a solution A.

The obtained solution A was put into a separable flask (having a volume of 1 L) and bubbled with a nitrogen gas to remove the dissolved oxygen. Then, while the solution A was stirred, the temperature was raised to 80°C.

Next, a tetrahydrofuran (THF) solution in which 1 g of benzoyl peroxide (manufactured by Tokyo Chemical Industry Co., Ltd., wetted with about 25% water) was dissolved in 10 mL of THF was added to the solution A, and the mixture was stirred at an internal temperature of 80°C for 8 hours to prepare a solution B. Note that the THF solution was added to the solution A by 2 ml at 5-minute intervals.

While stirred, the obtained solution B was naturally cooled until the temperature was 30°C or lower. Then, the solution B was dried to obtain an ionomer resin A. The ionomer resin A had a polymerization conversion rate of 91.6% and an ionic equivalent of 2.3 mmol/g. The polymerization conversion rate of the ionomer resin A was calculated from the obtained solid content.

(Synthesis Example 2)

Synthesis of ionomer resin B;
tert-Butyl methacrylate (manufactured by Mitsubishi Rayon Co., Ltd., product name "Acrylic Ester TB") (32 g), methacrylic acid (manufactured by FUJIFILM Wako Pure Chemical Corporation, Wako special grade) (8 g), and dodecyl mercaptan (manufactured by Tokyo Chemical Industry Co., Ltd., grade EP) (0.08 g) were dissolved in 200 g of ethyl acetate, and the resulting solution was put in a separable flask having a volume of 1 L and bubbled with a nitrogen gas to remove the dissolved oxygen. Then, while the solution was stirred, the temperature was raised to 80°C.

A solution in which 0.5 g of benzoyl peroxide (manufactured by Tokyo Chemical Industry Co., Ltd., wetted with about 25% water) was dissolved in 10 mL of THF solvent was added into the flask by 2 ml every 5 minutes. This step was repeated to add the whole amount of the polymerization catalyst. The solution in the flask was stirred for 6 hours while the internal temperature was maintained at 80°C.

The heating bath was removed, and then the solution was naturally cooled while stirred. When the temperature reached 30°C or less, the polymerized polymer solution was taken out. The polymer solution was dried to obtain a solid content. The polymerization conversion rate calculated from the obtained solid content was 91.3%. The ionic equivalent in the polymer was 2.3 mmol/g.

(Synthesis Example 3)

Synthesis of ionomer resin C:
tert-Butyl methacrylate (manufactured by Mitsubishi Rayon Co., Ltd., product name "Acrylic Ester TB") (28 g), methacrylic acid (manufactured by FUJIFILM Wako Pure Chemical Corporation, Wako special grade) (12 g), and dodecyl mercaptan (manufactured by Tokyo Chemical Industry Co., Ltd., grade EP) (0.08 g) were dissolved in 200 g of ethyl acetate, and the resulting solution was put in a separable flask having a volume of 1 L and bubbled with a nitrogen gas to remove the dissolved oxygen. Then, while the solution was stirred, the temperature was raised to 80°C.

A solution in which 0.5 g of benzoyl peroxide (manufactured by Tokyo Chemical Industry Co., Ltd., wetted with about 25% water) was dissolved in 10 mL of THF solvent was added into the flask by 2 ml every 5 minutes. This step was repeated to add the whole amount of the polymerization catalyst.

The solution in the flask was stirred for 6 hours while the internal temperature was maintained at 80°C.

The heating bath was removed, and then the solution was naturally cooled while stirred. When the temperature reached 30°C or less, the polymerized polymer solution was taken out. The polymer solution was dried to obtain a solid content. The polymerization conversion rate calculated from the obtained solid content was 91.2%. The ionic equivalent in the polymer was 3.5 mmol/g.

(Synthesis Example 4)

Preparation of second material A;
In 480 mL of THF, 2.0 g of a carbon black (Black Pearl-2000 manufactured by Cabot Corporation) was dispersed, 0.93 g of ethylenediamine was added dropwise to the resulting dispersion, and the resulting mixture was subjected to ultrasonic treatment for 120 minutes and then allowed to stand for 3 days. Subsequently, the mixture was filtered through a filter having a pore size of 0.3 $\mu$m, and the obtained filter residue was dried. The obtained dry solid (second material) was measured with thermogravimetric analysis (TGA) to find that 6.6% by weight of a component derived from the ethylenediamine was grafted onto the carbon black. Specifically, for determination of the graft ratio, the amount of the weight loss in the range of 200°C to 600°C was calculated as the amount of the grafted component using TG (manufactured by Hitachi High-Tech Science Corporation, product number "STA7300").

(Synthesis Example 5)

Preparation of second material B;
In 160 mL of THF, 0.613 g of Ketjen black (EC600JD manufactured by Lion Specialty Chemicals Co., Ltd.) was dispersed, 0.313 g of ethylenediamine was added dropwise to the resulting dispersion, and the resulting mixture was subjected to ultrasonic treatment for 120 minutes and then allowed to stand for 3 days. Subsequently, the mixture was filtered through a filter having a pore size of 0.3 $\mu$m, and the obtained filter residue was dried at 110°C. The obtained dry solid (second material) was measured with TGA to find that 5.4% by weight of a component derived from the ethylenediamine was grafted onto the Ketjen black. The graft ratio was calculated using the same method as in Synthesis Example 4.

(Synthesis Example 6)

Preparation of second material C; In 160 mL of THF, 0.604 g of Ketjen black (EC600JD manufactured by Lion Specialty Chemicals Co., Ltd.) was dispersed, 0.306 g of ethylenediamine was added dropwise to the resulting dispersion, and the resulting mixture was subjected to ultrasonic treatment for 120 minutes and then allowed to stand for 3 days. Subsequently, the mixture was filtered through a filter having a pore size of 0.3 $\mu$m, and the obtained filter residue was dried at 110°C. The obtained dry solid (second material) was measured with TGA to find that 3.9% by weight of a component derived from the ethylenediamine was grafted onto the Ketjen black. The graft ratio was calculated using the same method as in Synthesis Example 4.

(Example 1)

In 180 g of distilled water, 20 g of the ionomer resin A obtained in Synthesis Example 1 was dispersed, and 7 mL of 28% aqueous ammonia was added dropwise to dissolve the ionomer resin A under stirring. Furthermore, 1.0 g of expanded graphite (manufactured by TOYO TANSO CO., LTD., trade name "PF Powder 8F" (BET specific surface area = 22 $m^2$/g)) was added, and the mixture was treated using a jet mill disperser (manufactured by BERYU CO., LTD., BERYU MINI) 5 times, and then dried at 150°C for 180 minutes to prepare a raw material composition.

Next, the prepared raw material composition was fired at 400°C for 120 minutes using a furnace (manufactured by Motoyama Co., Ltd., removable muffle furnace "MBA-2040D-SP") having an inert atmosphere of nitrogen inside to obtain a carbon material-resin composite material in which the ionomer resin was grafted onto partially exfoliated graphite (the carbon material). The obtained carbon material-resin composite material had a graft ratio of 45.8% by weight. For determination of the graft ratio, the amount of the weight loss in the range of 200°C to 600°C was calculated as the amount of the grafted component using TG (manufactured by Hitachi High-Tech Science Corporation, product number "STA7300"). The ionic equivalent of the carbon material-resin composite material was determined to be 1.04 mmol/g using the evaluation method described below.

To 100 ml of ion-exchanged water, 55 mg of the obtained carbon material-resin composite material (having a content of carbon derived from graphite of 30 mg) and 3 ml of a 0.1 mol/L ammonia acetate solution were added to prepare a dispersion liquid having a pH of 10.3. To the dispersion liquid, 1 ml of 28% ammonia was further added dropwise to prepare an aqueous dispersion solution of the carbon material-resin composite material. The aqueous dispersion solution of the carbon material-resin composite material was dispersed for 1 hour with a jet mill disperser (manufactured by BERYU CO., LTD., BERYU MINI) to prepare a carbon material-resin composite material dispersion solution.

Furthermore, to 380 ml of ion-exchanged water, 318 mg of the second material A obtained in Synthesis Example 4 (having a content of carbon derived from graphite of 297 mg) and 0.1 mol/L acetic acid were added to prepare a dispersion liquid having a pH of 3.7. The obtained dispersion liquid was dispersed for 4 hours using a jet mill disperser (manufactured by BERYU CO., LTD., BERYU MINI) to prepare a second material A dispersion liquid.

Next, the second material A dispersion liquid was mixed with the carbon material-resin composite material dispersion solution at a slow rate of adding dropwise of 10 ml/min. The mixture was dried at 80°C for 1 hour, then at 110°C for 1 hour, and then at 150°C to prepare a powder in which the second material A and the carbon material-resin composite material (first material) were combined.

The obtained powder was fired at a temperature of 500°C for 2 hours with a furnace (manufactured by Motoyama Co., Ltd., removable muffle furnace "MBA-2040D-SP") having an inert atmosphere of nitrogen inside. Thus, a composite was obtained in Example 1. In 1 L of an aqueous solvent, 10 mg of the obtained composite was dispersed, the resulting dispersion liquid was subjected to ultrasonic treatment for 10 minutes and then filtered with a filter having a pore size of 0.3 μm. In the obtained filtrate, no second material (0 mg) was detected.

The fired composite was measured with TGA to find that the peak derived from the ionomer resin disappeared in 1 g of the composite.

(Example 2)

In 160 g of distilled water, 6 g of the ionomer resin B obtained in Synthesis Example 2 was dispersed, and 30 mL of 0.1 mol/L aqueous ammonia was added dropwise to dissolve the ionomer resin B under stirring. Furthermore, 0.3 g of expanded graphite (manufactured by TOYO TANSO CO., LTD., trade name "PF Powder 8F" (BET specific surface area = 22 $m^2$/g)) was added, and the mixture was treated using a jet mill disperser (manufactured by BERYU CO., LTD., BERYU MINI) for 5 hours, and then dried at 150°C for 180 minutes to prepare a raw material composition. Next, the prepared raw material composition was fired at 400°C for 120 minutes using a furnace (manufactured by Motoyama Co., Ltd., removable muffle furnace "MBA-2040D-SP") having an inert atmosphere of nitrogen inside to obtain a carbon material-resin composite material in which the ionomer resin was grafted onto partially exfoliated graphite (the carbon material). The obtained carbon material-resin composite material had a graft ratio of 61.6% by weight measured using the same method as in Example 1. The ionic equivalent of the carbon material-resin composite material was determined to be 1.43 mmol/g using the evaluation method described below.

To 190 ml of ion-exchanged water, 200 mg of the obtained carbon material-resin composite material (having a content of carbon derived from graphite of 93.2 mg) and 10 ml of a 0.1 mol/L ammonia acetate solution were added to prepare an aqueous dispersion solution of the carbon material-resin composite material, having a pH of 10.3. The aqueous dispersion solution of the carbon material-resin composite material was dispersed for 1 hour using a jet mill disperser (manufactured by BERYU CO., LTD., BERYU MINI) to prepare a carbon material-resin composite material dispersion solution.

To 190 ml of ion-exchanged water, 200 mg of the second material B obtained in Synthesis Example 5 (having a content of carbon derived from graphite of 189 mg and a BET specific surface area of 1,385 $m^2$/g) and 0.1 mol/L acetic acid were added to prepare a dispersion liquid having a pH of 3.7. The obtained dispersion liquid was dispersed for 1 hour using a jet mill disperser (manufactured by BERYU CO., LTD., BERYU MINI). As a result, the pH of the dispersion liquid rose to 4.8. Furthermore, 0.1 mol/L of acetic acid was added dropwise to adjust the pH to 3.9, and the resulting dispersion liquid was subjected to ultrasonic treatment for 1 hour. Thus, a second material B dispersion liquid was prepared.

Next, the second material B dispersion liquid was mixed with the carbon material-resin composite material dispersion solution at a slow rate of adding dropwise of 5 ml/min. The mixture was dried at 110°C to prepare a powder in which the second material and the carbon material-resin composite material (first material) were combined.

The obtained powder was fired at a temperature of 500°C for 1 hour with a furnace (manufactured by Motoyama Co., Ltd., removable muffle furnace "MBA-2040D-SP") having an inert atmosphere of nitrogen inside. Thus, a composite was obtained in Example 2.

The fired composite was measured with TGA to find that the peak derived from the ionomer resin disappeared in 1 g of the composite.

(Example 3)

In 160 g of distilled water, 9.5 g of the ionomer resin C obtained in Synthesis Example 3 was dispersed, and 9 g of 28% ammonia was added dropwise to dissolve the ionomer resin C under stirring. Furthermore, 0.5 g of expanded graphite (manufactured by TOYO TANSO CO., LTD., trade name "PF Powder 8F" (BET specific surface area = 22 $m^2$/g)) was added, and the mixture was treated using a jet mill disperser (manufactured by BERYU CO., LTD., BERYU MINI) for 5 hours, and then dried at 150°C for 180 minutes to prepare a raw material composition. Next, the prepared raw material composition was fired at 400°C for 120 minutes using a furnace (manufactured by Motoyama Co., Ltd., removable muffle furnace "MBA-2040D-SP") having an inert atmosphere of nitrogen inside to obtain a carbon material-resin composite material in which the ionomer resin was grafted onto partially exfoliated graphite (the carbon material). The obtained carbon material-resin composite material had a graft ratio of 65.6% by weight measured using the same method as in Example 1. The ionic equivalent of the carbon material-resin composite material was determined to be 2.28 mmol/g using the evaluation method described below.

To 190 ml of ion-exchanged water, 151 mg of the obtained carbon material-resin composite material (having a content of carbon derived from graphite of 99.1 mg) and 10 ml of a 0.1 mol/L ammonia acetate solution were added to prepare an aqueous dispersion solution of the carbon material-resin composite material, having a pH of 10.3. The aqueous dispersion solution of the carbon material-resin composite material was dispersed for 2 hours using a jet mill disperser (manufactured by BERYU CO., LTD., BERYU MINI) to prepare a carbon material-resin composite material dispersion solution.

To 190 ml of ion-exchanged water, 200 mg of the second material C obtained in Synthesis Example 6 (having a content of carbon derived from graphite of 150 mg and a BET specific surface area of 1,385 $m^2$/g) and 0.1 mol/L acetic acid were added to prepare a dispersion liquid having a pH of 3.7. The obtained dispersion liquid was dispersed for 2 hours using a jet mill disperser (manufactured by BERYU CO., LTD., BERYU MINI). Thus, a second material C dispersion liquid was prepared.

Next, the second material C dispersion liquid was mixed with the carbon material-resin composite material dispersion solution, the mixture was dispersed for 2 hours using a jet mill disperser (manufactured by BERYU CO., LTD., BERYU MINI) and dried at 110°C to prepare a powder in which the second material and the carbon material-resin composite material (first material) were combined.

The obtained powder was fired at a temperature of 500°C for 2 hours with a furnace (manufactured by Motoyama Co., Ltd., removable muffle furnace "MBA-2040D-SP") having an inert atmosphere of nitrogen inside. Thus, a composite was obtained in Example 3.

The fired composite was measured with TGA to find that the peak derived from the ionomer resin disappeared in 1 g of the composite.

(Comparative Example 1)

Preparation of graphite grafted with compound having no ionic functional group;
Expanded graphite (manufactured by TOYO TANSO CO., LTD., trade name "PF Powder 8", BET specific surface area = 22 $m^2$/g) (8 g), pure water (240 mL), and a 1% carboxymethyl cellulose (manufactured by Sigma-Aldrich Co. LLC., number average molecular weight = 250,000) aqueous solution (24 g) were mixed. The resulting mixture was irradiated with an ultrasonic wave using an ultrasonic treatment device (UH-600SR manufactured by SMT Co., Ltd.) at 480 W (output set to be about 80% of 600W) at 20 kHz for 5 hours to prepare an aqueous dispersion liquid of graphite.

To the aqueous dispersion liquid, 160 g of polyethylene glycol (manufactured by Sanyo Chemical Industries, Ltd., product number: PEG-600, number average molecular weight = 600) was added, the resulting mixture was mixed with a homomixer (HOMO MIXER manufactured by PRIMIX Corporation) at 9,000 rpm for 30 minutes to prepare a composition in which the expanded graphite was dispersed in the polyethylene glycol.

The composition was poured into a stainless steel container and maintained at a drying temperature of 150°C for 2 hours to obtain a dried composition in which water was removed.

Next, a heating step was performed in which the temperature was maintained at 380°C for 1 hour in a nitrogen atmosphere (the dried composition was heated at a rate of 5°C/min in a nitrogen atmosphere, and after reaching 380°C, the temperature was held for 1 hour). Thus, the polyethylene glycol was thermally decomposed to obtain resin-remaining partially exfoliated graphite. The resin-remaining partially exfoliated graphite had a content of polyethylene glycol of 39.3% by weight. The ionic equivalent of the obtained resin-remaining partially exfoliated graphite was determined to be 0 mmol/g using the evaluation method described below.

Preparation of carboxylic acid-modified Ketjen black;
An aqueous solution in which 0.308 g of Ketjen black (EC300J manufactured by Lion Specialty Chemicals Co., Ltd.) was dispersed in 80 g of distilled water, and a radical generator aqueous solution in which 0.2 g of 4,4'-azobis(4-cyanopentanoic acid) (ACP) was dissolved in 10 g of water were prepared. The Ketjen black aqueous solution (1 L) was put in a separable flask, nitrogen purge was performed, the separable flask was placed in an oil bath at 75°C, and the Ketjen black aqueous solution was stirred. When the temperature became stable, 3 ml of the radical generator aqueous solution was put into the flask, and the resulting mixture was heated for 8 hours. Then, 3 ml of the radical generator aqueous solution was further added, and the resulting mixture was further heated for 8 hours. Further, 4 ml of the radical generator aqueous solution was added, and the resulting mixture was further reacted for 8 hours. After the temperature inside the flask cooled to room temperature, the flask was allowed to stand for 3 days. Then, the mixture was filtered through a polytetrafluoroethylene (PTFE) filter having a pore size of 0.3 μm, a powder solution of the filter residue with a small amount of ethanol was subjected to decantation to wash the unadsorbed radical generator, and the obtained filter residue was dried at 110°C. The obtained dry solid was measured with TGA to find that 6.8% by weight of a component derived from the ACP was grafted onto the Ketjen black.

In 170 ml of NMP, 150 mg of the resin-remaining partially exfoliated graphite and 150 mg of the carboxylic acid-modified Ketjen black, prepared as described above, were dissolved, and the resulting solution was irradiated with an ultrasonic wave using an ultrasonic treatment device (manufactured by HONDA ELECTRONICS CO., LTD.) at 100 W at an oscillating frequency of 28 kHz for 4 hours. Then, 220 ml of dimethyl carbonate (DMC) was added, the resulting solution was left for 48 hours, and as a result, a precipitate was observed.

Then, the solution was filtered through a PTFE filter having a pore size of 0.3 μm, and the filter residue was dried at 110°C for 1 hour to prepare a composite powder of the partially exfoliated graphite and the carboxylic acid-modified Ketjen black.

The obtained composite powder had a BET surface area of 137 $m^2$/g, but the capacitor capacitance was too low to measure.

(Evaluation)

[Ionic equivalent]

The ionic equivalents of the carbon material-resin composite materials in Examples 1 to 3 and the resin-remaining partially exfoliated graphite in Comparative Example 1 were measured through preparing the following calibration curves.

(Preparation of calibration curve in neutralization titration method)

Titration experiment 1;
In 50.0 g of ion-exchanged water, 0.502 g of the ionomer resin A prepared in Synthesis Example 1 (having an ionic equivalent of 1.1 mmol/g) was dispersed, and while the resulting dispersion was stirred at 200 rpm, a 0.1 mol/L sodium hydroxide aqueous solution was added dropwise by a small amount until the ionomer resin A was visually dissolved. Complete dissolution needed 12.1 mL of the 0.1 mol/L sodium hydroxide aqueous solution added.

Titration experiment 2;
In 50.0 g of ion-exchanged water, 0.200 g of the ionomer resin A prepared in Synthesis Example 1 (having an ionic equivalent of 0.45 mmol/g) was dispersed, and while the resulting dispersion was stirred at 200 rpm, a 0.1 mol/L sodium hydroxide aqueous solution was added dropwise by a small amount until the ionomer resin A was visually dissolved. Complete dissolution needed 5.5 mL of the 0.1 mol/L sodium hydroxide aqueous solution added.

Titration experiment 3;
In 50.0 g of ion-exchanged water, 0.104 g of the ionomer resin A prepared in Synthesis Example 1 (having an ionic equivalent of 0.23 mmol/g) was dispersed, and while the resulting dispersion was stirred at 200 rpm, a 0.1 mol/L sodium hydroxide aqueous solution was added dropwise by a small amount until the ionomer resin A was visually dissolved. Complete dissolution needed 3.3 mL of the 0.1 mol/L sodium hydroxide aqueous solution added.

The relationship between the amount of the 0.1 mol/L sodium hydroxide added dropwise and the ionic equivalent in the ionomer resin A calculated from the amount of the charged ionomer resin A is shown in the graph in Fig. 1. When the amount of the 0.1 mol/L sodium hydroxide added dropwise (mL) is represented by x, and the ionic equivalent in the ionomer resin A is represented by y, the relationship y = 0.09x is obtained from Fig. 1, and the correlation coefficient $R^2$ is as high as 0.98.

(Quantification of ionic equivalent of carbon material-resin composite material)

In 50.0 g of ion-exchanged water, 0.20 g of the carbon material-resin composite material obtained in Example 1 was dispersed, and while the resulting dispersion was stirred at 200 rpm, a 0.1 mol/L sodium hydroxide aqueous solution was added dropwise by a small amount. Adding a 0.1 mol/L sodium hydroxide aqueous solution for titration leads to increase in the pH, but dissolution of the ionomer resin A and adsorption of cations lead to decrease in the pH. The neutralization titration point was defined as the point at which the pH did not change even after the alkaline solution was added and then the resulting dispersion was left. The neutralization needed 2.3 mL of the 0.1 mol/L sodium hydroxide aqueous solution added. Therefore, the amount of the anionic functional group in 1 g of the carbon material-resin composite material (ionic equivalent of the carbon material-resin composite material) obtained through the titration was 1.04 mmol/g [calculation basis; 2.31 mL × 0.09 × (1/0.20) = 1.04] .

The ionic equivalents in Examples 2 to 3 and Comparative Example 1 were also measured in the same manner as in Example 1.

[BET specific surface area]

The BET specific surface areas of the composites obtained in Examples 1 to 3 and Comparative Example 1 were measured using a high-accuracy gas adsorption amount measuring device (manufactured by MicrotracBEL, product number "BELSORP-MAX", nitrogen gas).

[Capacitor capacitance]

The composite obtained in Examples 1 to 3 and Comparative Example 1 and PTFE (manufactured by DuPont-Mitsui Fluorochemicals Co., Ltd.) as a binder were kneaded at a weight ratio of 9 : 1 and formed into a film using a rolling roller to obtain an electrode for a capacitor. The obtained electrode film was adjusted to have a thickness of 80 μm to 200 μm.

The obtained electrode for a capacitor was vacuum-dried at 150°C for 16 hours, and then punched into two circles each having a diameter of 1 cm, and the weights of the circles were measured. Next, the two electrodes for a capacitor as a positive electrode and a negative electrode respectively and a separator interposed between the two electrodes were formed into a cell, and then 500 μl of an electrolytic solution was injected to prepare an electric double layer capacitor. These operations were carried out in an environment with a dew point of -70°C or lower.

In measurement of the capacitance of the electric double layer capacitor, the control current value was set to 10 mA/g (a current of 10 mA flowed per 1 g of the electrode), and the repeated charge/discharge characteristics between 0 V and 2.5 V were measured for 3 cycles. From the measurement results obtained as described above, the capacitance was calculated using Formula (1) described below in which the calculation range was set to 1 V to 2 V.

$$C = I/(\Delta V/\Delta t) \ \ldots \ \text{Formula (1)}$$

(In Formula (1), C represents the capacitance and its unit is F, and I represents the discharge current value and its unit is A. ΔV represents the difference between the start voltage value and the end voltage value in the calculation range, and its unit is V. Here, the range is 2 V to 1 V, so that the value is 1. Δt represents the time required to discharge from the start voltage value to the end voltage value, and its unit is second.)

The capacitance per weight was calculated by dividing the capacitance calculated using Formula (1) described above by the total weight of the positive electrode and the negative electrode.

The results are shown in Table 1 below.

[Table 1]

|  | BET specific surface area ($m^2/g$) | Capacitor capacitance (F/g) |
|---|---|---|
| Example 1 | 1655 | 25.5 |
| Example 2 | 878 | 16.0 |
| Example 3 | 689 | 12.6 |
| Comparative Example 1 | 137 | 9.8 |

**Claims**

1. A carbon material-resin composite material comprising a carbon material and a resin that is at least partially grafted onto the carbon material,
the carbon material-resin composite material having an ionic equivalent of 0.1 mmol/g or more.

2. The carbon material-resin composite material according to claim 1, wherein the resin is a compound having an ionic functional group.

3. The carbon material-resin composite material according to claim 1 or 2, wherein the carbon material has a graphene laminated structure.

4. The carbon material-resin composite material according to any one of claims 1 to 3, wherein the carbon material is partially exfoliated graphite having a graphite structure in which graphite is partially exfoliated.

5. The carbon material-resin composite material according to any one of claims 2 to 4, wherein the ionic functional group is an anionic functional group.

6. The carbon material-resin composite material according to claim 5, wherein the anionic functional group is a carboxyl group.

7. The carbon material-resin composite material according to any one of claims 1 to 6, having a content of the resin of 10 parts by weight or more and 70 parts by weight or less based on 100 parts by weight of the carbon material-resin composite material.

8. A composite comprising:

a first material being the carbon material-resin composite material according to any one of claims 2 to 7; and
a second material having a functional group capable of turning to a counter ion with respect to the ionic functional group included in the first material.

9. The composite according to claim 8, wherein the ionic functional group is an anionic functional group, and the functional group capable of turning to a counter ion is a cationic functional group.

10. The composite according to claim 8 or 9,
wherein

the carbon material included in the first material has a graphene laminated structure, and
the second material is inserted between graphene layers in the carbon material.

11. A composite comprising:

a first material including a carbon material and a resin being a compound having an ionic functional group, the resin grafted onto the carbon material; and
a second material having a functional group capable of turning to a counter ion with respect to the ionic functional group,
the composite having a content of the second material of 0.1 mg or less in a filtrate obtained through subjecting a dispersion liquid in which 10 mg of the composite is dispersed in 1 L of an aqueous solvent to ultrasonic treatment for 10 minutes and then filtering the dispersion liquid with a filter having a pore size of 0.3 $\mu$m.

12. The composite according to any one of claims 8 to 11, having a BET specific surface area of 100 $m^2$/g or more and 3,000 $m^2$/g or less.

13. A method for manufacturing a composite, the method comprising the steps of:

preparing a first material being a carbon material-resin composite material including a carbon material and a resin being a compound having an ionic functional group; and
combining the first material and a second material having a functional group capable of turning to a counter ion with respect to the ionic functional group included in the first material.

14. The method according to claim 13, further comprising the step of heating at a temperature lower than a thermal decomposition temperature of the compound having an ionic functional group after the step of combining.

15. The method according to claim 13, further comprising the step of heating at a temperature higher than a thermal decomposition temperature of the compound having an ionic functional group after the step of combining.

16. An electrode material for an electricity storage device, the electrode material comprising the carbon material-resin composite material according to any one of claims 1 to 7 or the composite according to any one of claims 8 to 12.

[FIG. 1.]

## INTERNATIONAL SEARCH REPORT

| | International application No. |
|---|---|
| | PCT/JP2020/004862 |

### A. CLASSIFICATION OF SUBJECT MATTER

C01B 32/21(2017.01)i; H01G 11/42(2013.01)i; H01G 11/86(2013.01)i; H01M 4/36(2006.01)i; H01M 4/587(2010.01)i
FI: C01B32/21; H01G11/42; H01G11/86; H01M4/36 A; H01M4/587

According to International Patent Classification (IPC) or to both national classification and IPC

### B. FIELDS SEARCHED

Minimum documentation searched (classification system followed by classification symbols)
C01B32/21; H01G11/42; H01G11/86; H01M4/36; H01M4/587

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
JSTPlus/JST7580/JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 2015-103449 A (SAMSUNG SDI CO., LTD.) | 1-3, 5-12, 16 |
| Y | 04.06.2015 (2015-06-04) examples 1-5 | 4 |
| X | JP 6-275265 A (SEIKO ELECTRONICS INDUSTRIAL CO., | 1-3, 5-7, 16 |
| Y | LTD.) 30.09.1994 (1994-09-30) claims, examples 1, 2 | 4 |
| X | CN 105419615 A (QINGDAO TECHNOLOGICAL UNIVERSITY) 23.03.2016 (2016-03-23) example 1 | 1-9, 13-15 |
| Y | WO 2015/098758 A1 (SEKISUI CHEMICAL CO., LTD.) 02.07.2015 (2015-07-02) paragraph [0020] | 4 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 April 2020 (02.04.2020) | 14 April 2020 (14.04.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**EP 3 925 931 A1**

| INTERNATIONAL SEARCH REPORT | | International application No. |
|---|---|---|
| Information on patent family members | | PCT/JP2020/004862 |

| Patent Documents referred in the Report | Publication Date | Patent Family | Publication Date |
|---|---|---|---|
| JP 2015-103449 A | 04 Jun. 2015 | KR 10-2015-0060513 A | |
| JP 6-275265 A | 30 Sep. 1994 | (Family: none) | |
| CN 105419615 A | 23 Mar. 2016 | (Family: none) | |
| WO 2015/098758 A1 | 02 Jul. 2015 | US 2016/0358718 A1 paragraph [0040] EP 3089184 A1 CN 105493214 A KR 10-2016-0102111 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015098758 A
- WO 2017090553 A
- WO 2014034156 A